# EUROPEAN PATENT SPECIFICATION

(11) **EP 1 404 026 B1**
(45) Date of publication and mention of the grant of the patent: **26.12.2007**
(21) Application number: 03020707.0
(22) Date of filing: 11.09.2003
(51) Int. Cl.: H04B 1/16

(54) **Reproduction apparatus, output apparatus and method for controlling power consumption**
Wiedergabegerät, Ausgabegerät und Verfahren zur Steuerung des Leistungsverbrauchs
Dispositif de reproduction, dispositif de sortie et procédé pour la commande de la consommation d'énergie

(30) Priority: 30.09.2002 JP 2002287119
(43) Date of publication of application: 31.03.2004
(73) Proprietor: KABUSHIKI KAISHA TOSHIBA, Tokyo (JP)
(72) Inventor: Yoshizawa, Junichi,c/o Toshiba Corp. , Int.Prop., Tokyo 105-8001 (JP)
(74) Representative: Henkel, Feiler & Hänzel

(56) References cited:
- DE-U- 20 208 462
- PATENT ABSTRACTS OF JAPAN vol. 1995, no. 06, 31 July 1995 (1995-07-31) -& JP 07 074663 A (SONY CORP), 17 March 1995 (1995-03-17)
- MATTISSON S: "Low-power considerations in the design of bluetooth" ISLPED '00, 26 July 2000 (2000-07-26), pages 151-154, XP010517320 Rapallo, IT

## Description

The present invention relates to a reproduction apparatus having a content data reproducing function, an output apparatus having a data outputting function and a method for controlling power consumption. More particularly, the present invention relates to a method for controlling power consumption applied to a communication system, which transmits and receives content data through a radio communication interface.

In recent years, as radio technologies in personal areas, such as Bluetooth^{™} and HomeRF^{™} have been developed, consideration has been given to adoption of a radio interface to various electronic devices (e.g., personal computers, personal digital assistants, cellular phones) based on these radio technologies. Actually, such an interface has been adopted to some types of electronic device.

In particular, since Bluetooth costs are low and standardization organizations highly value its connectivity, it will become a standard technology for short-distance radio communication in the next generation. Bluetooth is one of technologies that are expected to be applicable to various fields, particularly to AV (audio/video) apparatuses.

AV data transmission to a wireless headphone is an application of Bluetooth to AV apparatuses (see, for example, Jpn. Pat. Appln. KOKAI Publication No. 2002-112383). According to this prior art, a wireless headphone is connected to a portable audio player or the like by means of the Bluetooth technology, so that a conventional cable is not required. As a result, a more conformable audio reproduction environment can be expected.

A portable apparatus called a wireless headset, utilizing infrared rays or high-frequency radio, has been published and already put into practical use. The Bluetooth wireless headset apparatus is vastly different from the conventional wireless headset in that the former employs a connection-type radio communication system (in which various data is transmitted and received while a logical connection is maintained), and the latter uses a connection-less-type radio communication in which a connection is not established (e.g., walkie talkie, broadcast transmission etc.). It is considered that this system has many advantages over the conventional system: for example, the applicability to various devices, the assurance of data reliability by a standard protocol, etc.

However, in an apparatus utilizing a connection-type communication system like Bluetooth, in order to maintain a logical connection, an RF section keeps executing data transmission and reception even in a period when audio data or the like is not being transmitted. Therefore, the apparatus always consumes a large amount of power. In this condition, the remaining battery level of the apparatus decreases rapidly, which is not desirable particularly for a portable apparatus.

JP A 07 074663 discloses an audio equipment comprising a receiving circuit which intermittently accepts a remote control signal from a receiver at the time of a stop mode. The receiver turns off the power of the transmitting circuit and receiving circuit at the stop mode. When a remote control signal which directs an operation mode other than the stop mode from the receiver, the receiving circuit of the audio equipment performs reception in succession. The audio equipment becomes the operation mode according to the remote control signal. When a remote control signal which directs the stop mode is sent from the receiver at the operation mode, the audio equipment becomes the stop mode and the receiving circuit of the audio equipment performs intermittent reception.

Furthermore, DE 202 08 462 U1 and "LOW-POWER CONSIDERATIONS IN THE DESIGN OF BLUETOOTH", Seven Mattisson, Ericsson Mobile Communications AB, XP_10517320A_1 of 2000 discloses to provide different levels of reduced power consumption operation modes in Bluethooth environments.

Embodiments of the present invention may provide a reproduction apparatus, an output apparatus and a method for controlling power consumption, which reduces power consumption, while ease of the operation is maintained.

According to the present invention the above object is achieved by means of a method according to claims 1, an output apparatus according to claim 7 and by reproduction apparatus according to claim 10. The dependent claims are directed to different advantageous aspects of the invention.

According to one aspect of the present invention, there is provided a power consumption control method applied to a communication system including a reproduction apparatus capable of reproducing content data and an output apparatus capable of outputting data based on the reproduced content data, the method comprising transmitting the content data reproduced by the reproducing apparatus to the output apparatus through a radio communication interface; and transitioning at least one of the reproducing apparatus and the output apparatus from an ordinary operation mode to a low-power consumption operation mode through the radio communication interface, when a data reproduction stop request is made in another of the reproducing apparatus and the output apparatus.

According to another aspect of the present invention, there is provided an output apparatus, comprising a radio communication interface; an output control unit configured to output data in accordance with content data transmitted from a reproduction apparatus through the radio communication interface; and a power control unit configured to control at least the reproduction apparatus to transition from an ordinary operation mode to a low-power consumption operation mode through the radio communication interface, when a data reproduction stop request is made.

According to still another aspect of the present invention, there is provided a reproduction apparatus, comprising a radio communication interface; a reproduction control unit configured to reproduce content data; a transmission control unit configured to transmit the content data reproduced by the reproduction control unit to an output apparatus through the radio communication interface; and a power control unit configured to control at least the output apparatus to transition from an ordinary operation mode to a low-power consumption operation mode through the radio communication interface, when a data reproduction stop request is made.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a schematic configuration of a music reproduction apparatus according to an embodiment of the present invention;
FIG. 2 is a block diagram showing a schematic configuration of a headphone according to the embodiment;
FIG. 3 is a block diagram showing a function configuration of a system control section of the music reproduction apparatus shown in FIG. 1;
FIG. 4 is a block diagram showing a function configuration of a system control section of the headphone shown in FIG. 2;
FIG. 5 is a diagram showing procedures carried out between the music reproduction apparatus and the headphone before a connection-type communication link is established;
FIG. 6 is a flow chart showing an example of procedures to transition to a low-power consumption operation mode;
FIG. 7 is a flow chart showing an example of procedures to return from the low-power consumption operation mode to an ordinary operation mode;
FIG. 8 is a flow chart showing procedures in the music reproduction apparatus (master) when Sleep Mode 1 is set;
FIG. 9 is a flow chart showing procedures in the headphone (slave) when Sleep Mode 1 is set;
FIG. 10 is a flow chart showing procedures in the music reproduction apparatus (master) when Sleep Mode 2 is set;
FIG. 11 is a flow chart showing procedures in the headphone (slave) when Sleep Mode 2 is set;
FIG. 12 is a flow chart showing procedures in the headphone (master) when Sleep Mode 1 is set;
FIG. 13 is a flow chart showing procedures in the music reproduction apparatus (slave) when Sleep Mode 1 is set;
FIG. 14 is a flow chart showing procedures in the headphone (master) when Sleep Mode 2 is set; and
FIG. 15 is a flow chart showing procedures in the music reproduction apparatus (slave) when Sleep Mode 2 is set.

Embodiments of the present invention will now be described with reference to the accompanying drawings.

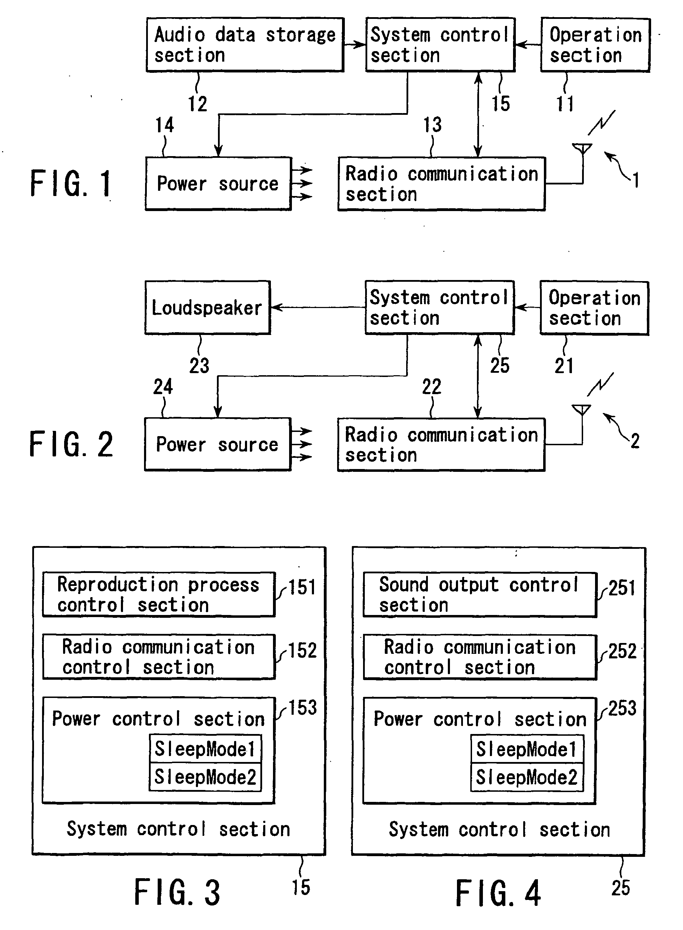

FIG. 1 is a block diagram showing a schematic configuration of a music reproduction apparatus according to an embodiment of the present invention. FIG. 2 is a block diagram showing a schematic configuration of a headphone according to the embodiment.

A music reproduction apparatus 1 shown in FIG. 1 is, for example, a portable music player. It has an operation section 11, an audio data storage section 12, a radio communication section (interface) 13, a power source (and a power controller) 14 and a system control section 15. The music reproduction apparatus 1 may be an electronic device, such as a personal digital assistant or a cellular phone.

The operation section 11 has a power (on/off) button, a group of reproduction processing buttons (a reproduction (play) button, a stop button, a pause button, and fast-forward and fast-reverse buttons). When a button is depressed, the corresponding command is supplied to the system control section 15.

The audio data storage section 12 is a non-volatile memory medium storing audio data. It may be a CD (compact disk), an MD (mini disk), a semiconductor memory, etc.

The radio communication section 13 is a communication module based on a radio communication interface, which realizes a connection-type radio communication system (i.e., a radio communication system in which audio data or the like is transmitted and received in a state where a logical connection is maintained). In this embodiment, Bluetooth is used as the radio communication interface. According to Bluetooth, audio data or the like is transmitted after negotiations between apparatuses are carried out and a logical connection therebetween is established. In this case, communication can be performed bidirectionally. Any interface other than Bluetooth (for example, a wireless LAN) can be used as the radio communication interface, if it is a connection-type radio communication system.

The power source 14 has a battery, which supplies electric power to the respective components of the music reproduction apparatus 1.

The system control section 15 corresponds to a CPU (central processing unit), which controls the overall operations of the music reproduction apparatus 1, and a memory. It executes power consumption control and the like in accordance with predetermined programs.

As shown in FIG. 3, the system control section 15 has various function sections, such as a reproduction process control section 151, a radio communication control section 152 and a power control section 153.

The reproduction process control section 151 executes reproduction or stops reproduction of audio data stored in the audio data storage section 12 in accordance with various commands issued by depression of the reproduction button, the stop button, the pause button, etc. in the operation section 11. The reproduced audio data is transmitted to another electronic device (here, a headphone 2) through the radio communication control section 152.

The radio communication control section 152 corresponds to software that controls the radio communication section (communication module) 13. It transmits the reproduced audio data to the other electronic device (the headphone 2) or transmits/receives various commands to/from the electronic device.

The power control section 153 controls the on/off state of the power source 14 in accordance with a command corresponding to depression of the power button of the operation section 11. In addition, it controls the power source 14 (or the power controller) in accordance with a predetermined command generated in the music reproduction apparatus 1 or a predetermined command transmitted from the other electronic device (here, the headphone 2). As a result, the power control section 153 causes the music reproduction apparatus 1 to transition from an ordinary power consumption operation mode to a low-power consumption operation mode and vice versa. The power control section 153 also has a function of transmitting, through the radio communication section 13, a command to cause the other electronic device (the headphone 2) to transition from an ordinary power consumption operation mode to a low-power consumption operation mode and vice versa in accordance with a predetermined command generated in the music reproduction apparatus 1.

The low-power consumption operation mode means a state in which power consumption involved in the radio communication is reduced. It includes a first mode (Sleep Mode 1) in which the radio communication connection is maintained, and a second mode (Sleep Mode 2) in which the connection is cut off. Details of Sleep Modes 1 and 2 will be described later.

The headphone 2 shown in FIG. 2 is, for example, a portable wireless headphone. It has an operation section 21, a radio communication (interface) section 22, a loudspeaker 23, a power source (and a power controller) 24and a system control section 25. A headset or earphones can be used in place of the headphone.

The operation section 21 has operation buttons or switches, which are necessary to operate another electronic device (here, the music reproduction apparatus 1): a power (on/off) button, a group of reproduction processing buttons (a reproduction (play) button, a stop button, a pause button, and fast-forward and fast-reverse buttons). When a button is depressed, the corresponding command is supplied to the system control section 25.

The radio communication section 22 is a communication module based on a radio communication interface, which realizes a connection-type radio communication system (i.e., a radio communication system in which audio data or the like is transmitted and received in a state where a logical connection is maintained). In this embodiment, Bluetooth is used as the radio communication interface. Any interface other than Bluetooth (for example, a wireless LAN) can be used as the radio communication interface, if it is a connection-type radio communication system.

The loudspeaker 23 outputs sound in accordance with audio data transmitted from the other electronic device (the music reproduction apparatus 1) through the radio communication section 22.

The power source 24 has a battery, which supplies electric power to the respective components of the headphone 2.

The system control section 25 corresponds to a CPU (central processing unit), which controls the overall operations of the headphone 2, and a memory. It controls power consumption and the like in accordance with predetermined programs.

As shown in FIG. 4, the system control section 25 has various function sections, such as a sound output control section 251, a radio communication control section 252 and a power control section 253.

The sound output control section 251 receives audio data transmitted from the other electronic device (the music reproduction apparatus 1) through the radio communication section 22, and causes the loudspeaker 23 to output it as sound. The sound output control section 251 also has a function for transmitting, through the radio communication section 22, commands to instruct the other electronic device (the music reproduction apparatus 1) to execute or stop reproduction of audio data in accordance with various commands issued by depression of the reproduction button, the stop button, the pause button, etc. in the operation section 21.

The radio communication control section 252 corresponds to software that controls the radio communication section (communication module) 22. It transfers audio data transmitted from the other electronic device (the music reproduction apparatus 1) to the system control section 25, or transmits/receives various commands to/from the electronic device.

The power control section 253 controls the on/off state of the power source 24 in accordance with a command corresponding to depression of the power button of the operation section 21. In addition, it controls the power source 24 (or the power controller) in accordance with a predetermined command generated in the headphone 2 or a predetermined command transmitted from the other electronic device (the music reproduction apparatus 1). As a result, the power control section 253 causes the headphone 2 to transition from the ordinary power consumption operation mode to the low-power consumption operation mode and vice versa. The power control section 253 also has a function of transmitting, through the radio communication section 22, a command to cause the other electronic device (the music reproduction apparatus) to transition from the ordinary power consumption operation mode to the low-power consumption operation mode and vice versa in accordance with a predetermined command generated in the headphone 2.

Details of Sleep Modes 1 and 2 will be described later.

Procedures carried out between the music reproduction apparatus 1 and the headphone 2 before a connection-type communication link is established will be briefly described.

The steps executed before a connection by Bluetooth is established are classified into, for example, the following three stages:
Inquiry (Acquisition of an address (BD_ADDR) specific to a peripheral device);
Paging (Establishment of a connection to a desired BD_ADDR device at a link layer level); and
Service (Establishment of a connection at a desired service (application) level).

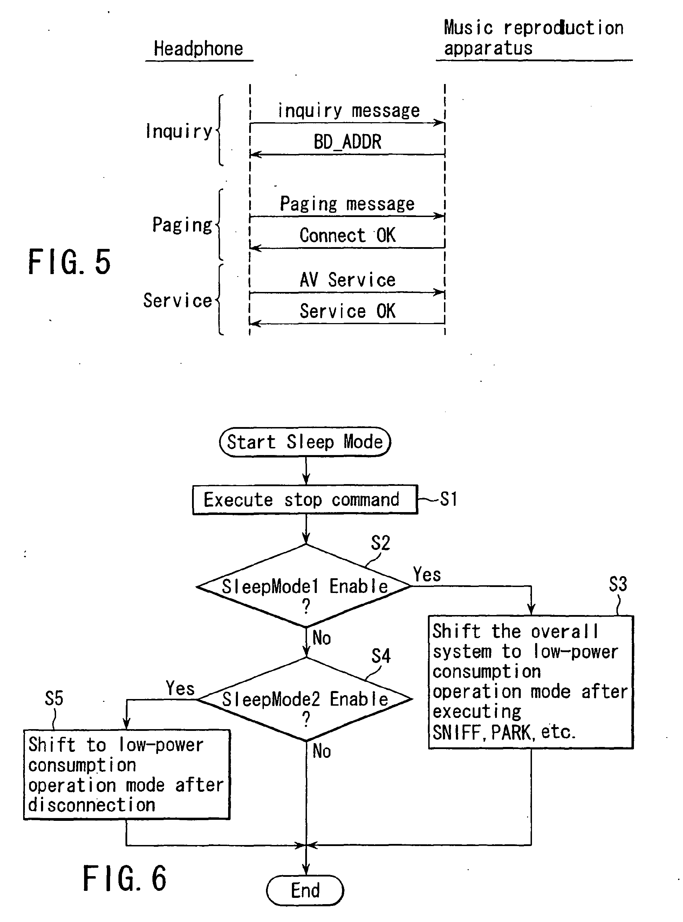

The above procedures are shown in FIG. 5. FIG. 5 shows an example, in which the headphone 2 is a master, and the music reproduction apparatus 1 is a slave.

The master transmits an "Inquiry" message, and obtains "BD_ADDR" from the slave. After the master has obtained "BD_ADDR", it transmits a "Paging" message, and obtains a "Connection OK" message from the slave, whereby it establishes a connection of the link layer level. Then, the master transmits, for example, an "AV Service" message, obtains a "Service OK" message from the slave, whereby it establishes a connection of the service (application) level. Thereafter, the music reproduction apparatus can be operated on the bases of various AV processing commands.

Needless to say, the music reproduction apparatus 1 can be a master, while the headphone 2 can be a slave.

In the state where the connection is established as described above, assume that either the music reproduction apparatus 1 or the headphone 2 issues a stop command or a pause command during reproduction of music (that is, the stop button or the pause button is depressed). In this case, flow of AV data in an AV data channel is stopped by the stop command. The music reproduction apparatus 1 and the headphone 2 are set to the low-power consumption operation mode (Sleep Mode). Alternatively, if necessary, they are set to the low-power consumption operation mode, after a predetermined time is counted by a timer.

The low-power consumption operation mode according to this embodiment has the following two modes:
Sleep Mode 1: a mode to start a SNIFF mode or PARK mode with the connection maintained, when reproduction is stopped; and
Sleep Mode 2: a mode to cut the connection, when reproduction is stopped.

The user can select/set Sleep Mode 1 or 2 in at least one of the music reproduction apparatus 1 and the headphone 2. The set information is stored in a predetermined memory area, in which the selected mode is enabled.

An example of the procedures to transition to the low-power consumption operation mode will be described with reference to the flow chart shown in FIG. 6.

When the stop command is detected during reproduction (Step S1), it is determined whether Sleep Mode 1 or 2 is enabled (Steps S2 and S4). If Sleep Mode 1 is enabled (Yes in Step S2), the entire radio communication system is transitioned to the low-power consumption operation mode by setting the SNIFF mode or PARK mode (step S3). If Sleep Mode 2 is enabled (Yes in Step S4), the entire radio communication system is transitioned to the low-power consumption operation mode after the connection is cut off (Step S5).

In Sleep Mode 1, since only the minimum procedures to maintain the connection are performed, the power consumption can be considerably reduced. In Sleep Mode 2, since no procedure to maintain the connection is performed, the power consumption can be much more reduced than in Sleep Mode 1.

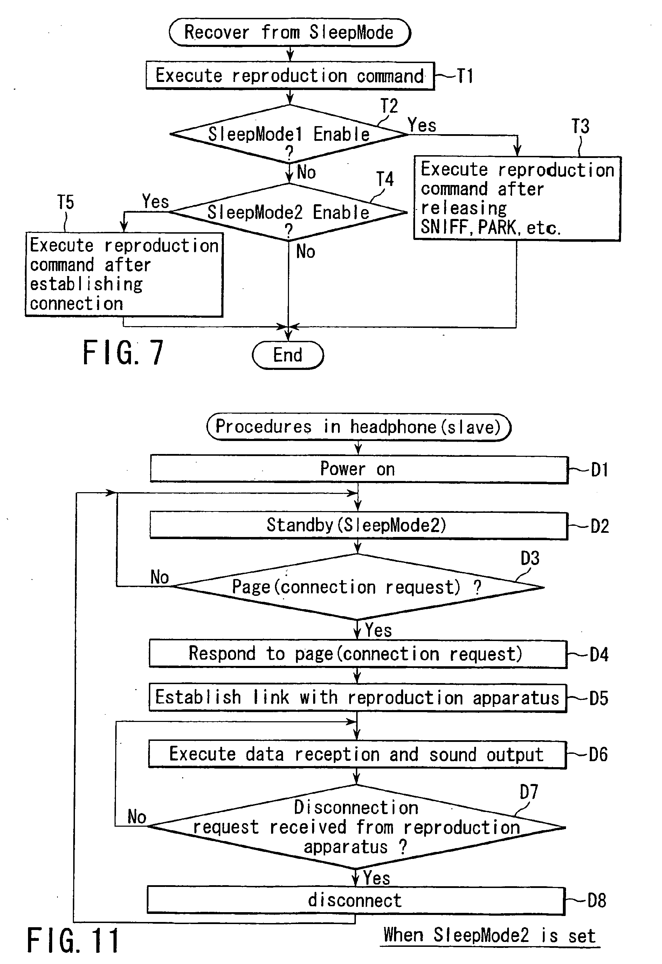

An example of procedures to recover from the low-power consumption operation mode to the ordinary operation mode will be described with reference to FIG. 7.

When a reproduction command is detected while the reproduction is stopped (Step T1), it is determined whether Sleep Mode 1 or 2 is enabled (Steps T2 and T4). If Sleep Mode 1 is enabled (Yes in Step T2), the entire radio communication system is recovered to the ordinary operation mode by releasing the SNIFF mode or PARK mode, and thereafter executes reproduction (step T3). If Sleep Mode 2 is enabled (Yes in Step T4), the connection is established to recover the entire radio communication system to the ordinary operation mode, and thereafter reproduction is executed (Step T5).

In Sleep Mode 2, although a process for establishing a connection (paging process or the like) is required, reproduction can be started soon after a short delay time for the process, which is negligible to the user. In Sleep Mode 1, since it is unnecessary to carry out the process for establishing a connection, reproduction can be started after a much shorter delay time.

Specific examples of the operations of the power consumption control according to the embodiment will now be described.

### <Operation in the case where the music reproduction apparatus is "a master" and the headphone is "a slave">

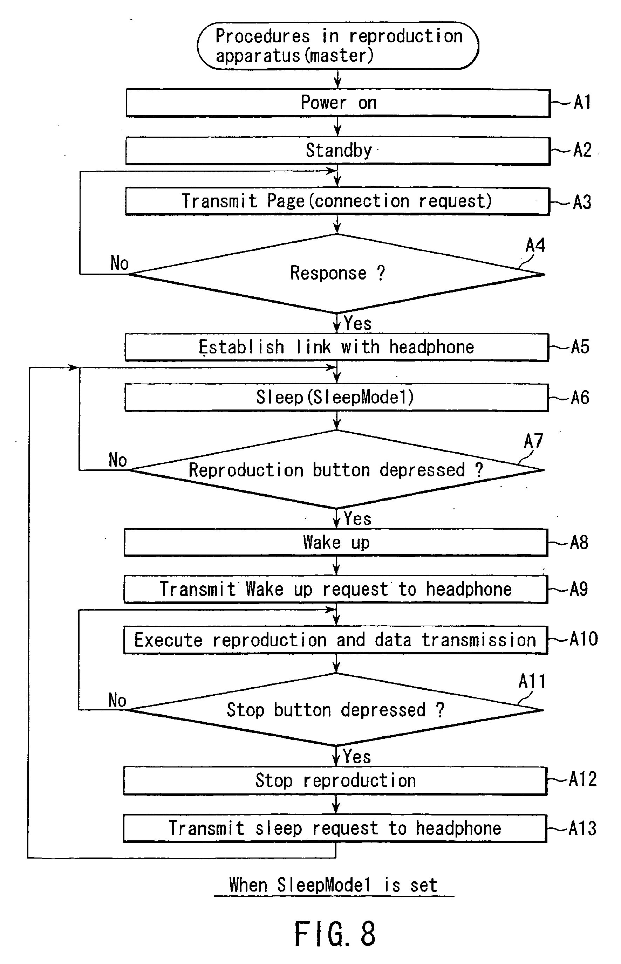

First, an operation in the case where the music reproduction apparatus 1 is a master and the headphone 2 is a slave will be described with reference to the flow charts shown in FIGS. 8 to 11.

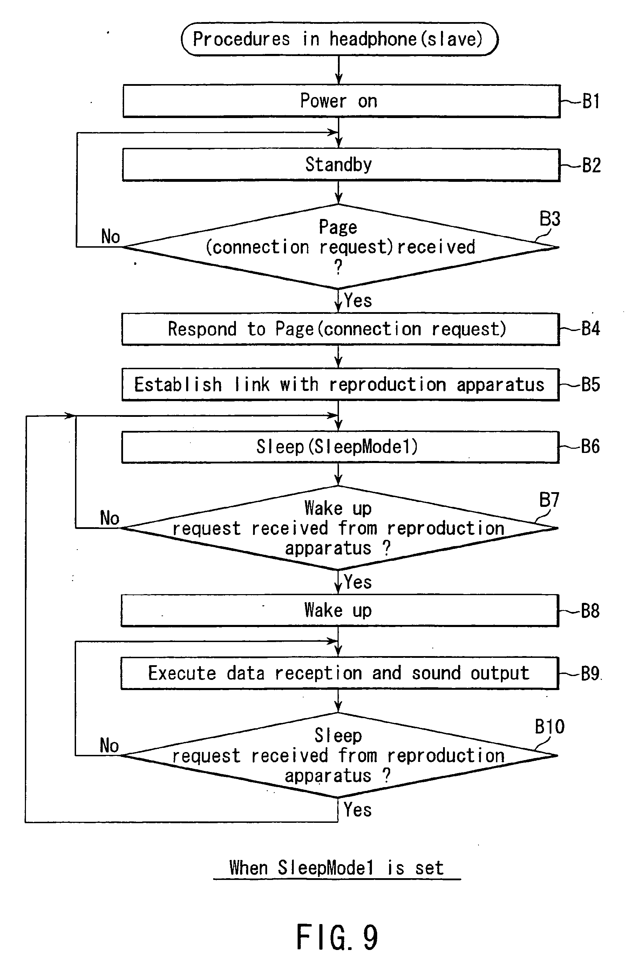

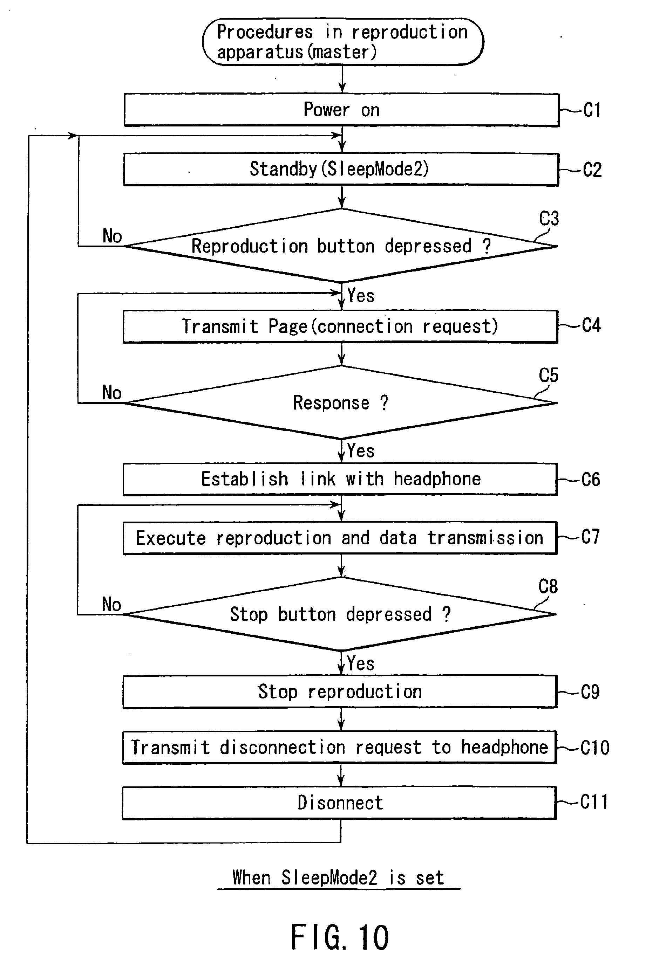

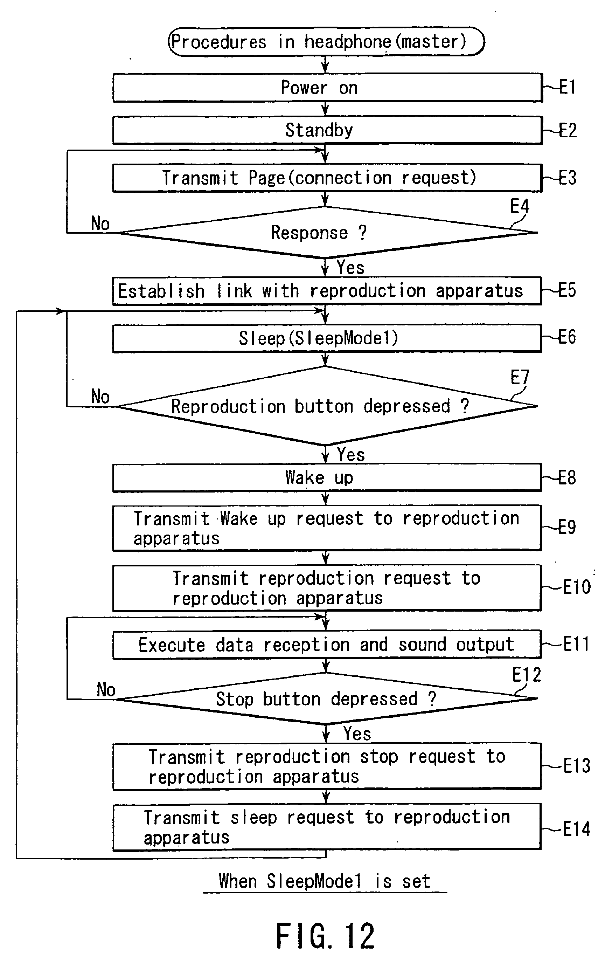

To make the explanation of the operation easier to understand, an operation in the case where Sleep Mode 1 is selectively set is described with reference to FIGS. 8 and 9, and then an operation in the case where Sleep Mode 2 is selectively set is described with reference to FIGS. 10 and 11.

FIG. 8 shows procedures in the music reproduction apparatus (master) when Sleep Mode 1 is set.

When the music reproduction apparatus 1 detects that the power is turned on (Step A1), it is set in the standby mode (Step A2). Thereafter, if necessary, it completes the Inquiry process, and then transmits a page (connection request) (Step A3). If there is any response to the request (Step A4), a link with the headphone 2 is established (Step A5) and the music reproduction apparatus 1 is transitioned to the low-power consumption operation mode "Sleep Mode 1" (Step A6). At this time, the headphone 2 is also transitioned to the low-power consumption operation mode "Sleep Mode 1" automatically (or in response to the command from the music reproduction apparatus 1).

Thereafter, if the reproduction button is depressed (Step A7), the music reproduction apparatus 1 transitions from the low-power consumption operation mode to the ordinary operation mode (Step A8). At the same time, the music reproduction apparatus 1 transmits to the headphone 2 a command that the headphone 2 should recover to the ordinary operation mode (Step A9). Then, it executes an audio data reproduction process and transmits audio data to the headphone 2 (Step A10).

Thereafter, if the stop button or the pause button is depressed (Step A11), the reproduction is stopped (Step A12), and a command that the headphone 2 should enter the Sleep Mode 1 is transmitted to the headphone 2 (Step A13). Then, the procedures from Steps A6 to A13 are repeated.

FIG. 9 shows procedures in the headphone 2 (slave) when Sleep Mode 1 is set.

When the headphone 2 detects that the power is turned on (Step B1), it is set in the standby mode (Step B2). Thereafter, if the headphone 2 receives a page (connection request) from the music reproduction apparatus 1 (Step B3), it responds thereto (Step B4). As a result, a link with the music reproduction apparatus 1 is established (Step B5) and the headphone 2 is transitioned to the low-power consumption operation mode "Sleep Mode 1" (Step B6). At this time, the headphone 2 is transitioned to the low-power consumption operation mode "Sleep Mode 1" automatically (or in response to the command from the music reproduction apparatus 1).

Thereafter, if the headphone 2 receives from the music reproduction apparatus 1 a command that it should recover to the ordinary operation mode (Step B7) (as, for example, by a play command button executed by the user on the operation section 11), it transitions from the low-power consumption operation mode to the ordinary operation mode (Step B8), and receives audio data from the music reproduction apparatus 1 and outputs sound (Step B9).

Thereafter, if the headphone 2 receives from the music reproduction apparatus 1 a command that it should be transitioned to the low-power consumption operation mode "Sleep Mode 1" (Step B10) (as, for example, corresponding to a pause or stop command by the user on the operation section 11), the procedures from Steps B6 to B10 are repeated.

FIG. 10 shows procedures in the music reproduction apparatus (master) when Sleep Mode 2 is set.

When the music reproduction apparatus 1 detects that the power is turned on (Step C1) (e.g., pressing the power on button of the operation section 11), it is set in the standby mode (Step C2).

Thereafter, if the reproduction button is depressed (Step C3) (e.g., by pressing the "play" button on the music reproduction apparatus 1), the music reproduction apparatus 1 completes the Inquiry process. Then, it transmits a page (connection request) (Step C4). If there is any response to the request (Step C5), a link with the headphone 2 is established (Step C6) and the music reproduction apparatus 1 reproduces audio data and sends the audio data to the headphone 2 (Step C7).

Thereafter, if the stop button or the pause button is depressed on the operation section 11 (Step C8), the reproduction is stopped (Step C9), and the music reproduction apparatus 1 transmits to the headphone 2 a disconnection request and a command that the headphone 2 should be transitioned to the low-power consumption operation mode "Sleep Mode 2" (Step C10), and cuts off the connection. Then, the procedures from Steps C2 to C11 are repeated.

FIG. 11 shows procedures in the headphone 2 (slave) when Sleep Mode 2 is set.

When the headphone 2 detects that the power is turned on (Step D1), it is set in the standby mode (Step D2). Thereafter, if the headphone 2 receives a page (connection request) from the music reproduction apparatus 1 (Step D3), it responds thereto (Step D4). As a result, a link with the music reproduction apparatus 1 is established (Step D5) and the headphone 2 receives audio data from the music reproduction apparatus 1 and output sound (Step D6).

Thereafter, if the headphone 2 receives from the music reproduction apparatus 1 a command that it should transition to the low-power consumption operation mode "Sleep Mode 2" (Step D7), (initiated, for example, by a "stop" command actuated on the operation section 11) it cuts off the connection (Step D8) and repeats the procedures from Steps D2 to D8.

### <Operation in the case where the headphone is "a master" and the music reproduction apparatus is "a slave">

Finally, an operation in the case where the headphone 2 is a master and the music reproduction apparatus 1 is a slave will be described with reference to the flow charts shown in FIGS. 12 to 15.

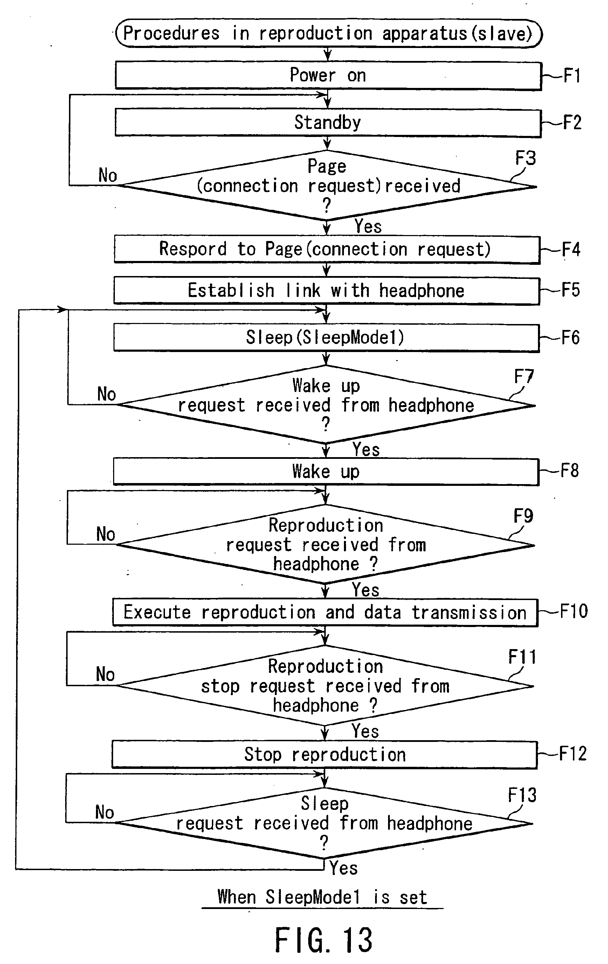

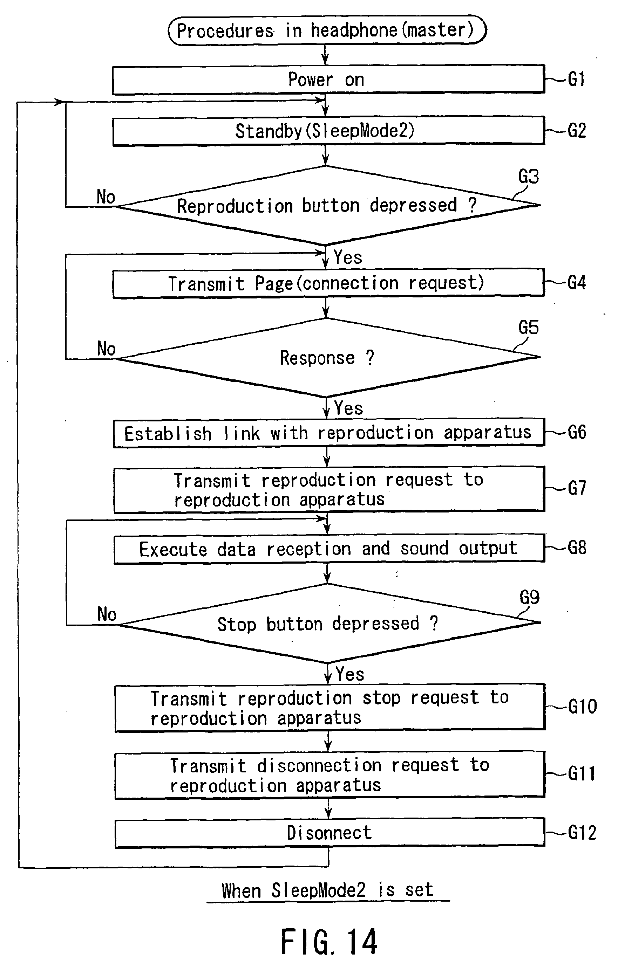

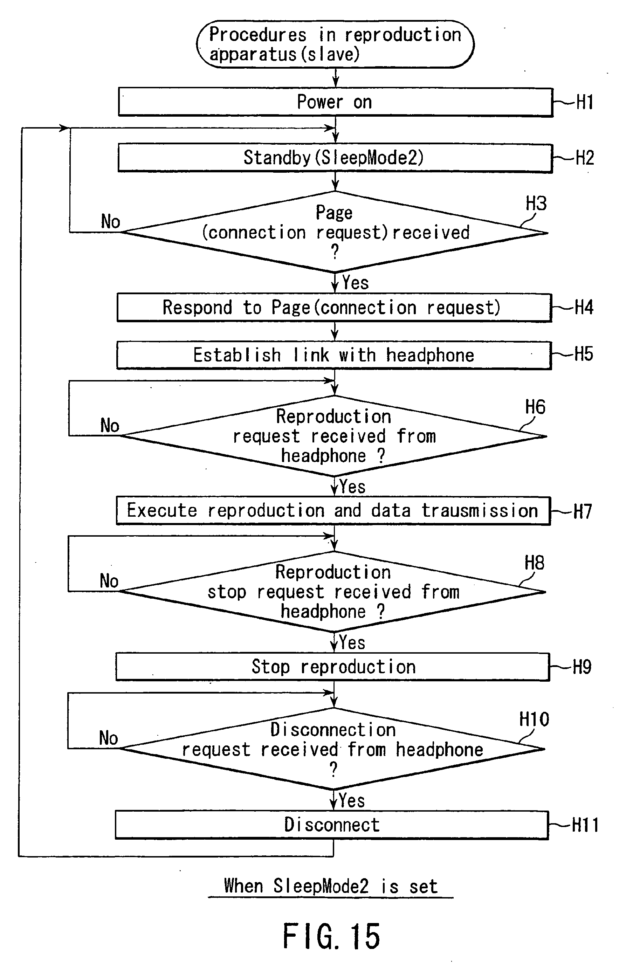

To make the explanation of the operation easier to understand, an operation in the case where Sleep Mode 1 is selectively set is described with reference to FIGS. 12 and 13, and an operation in the case where Sleep Mode 2 is selectively set is described with reference to FIGS. 14 and 15.

FIG. 12 shows procedures in the headphone (master) when Sleep Mode 1 is set. In these embodiments, actuations of the "play" and "stop" commands are performed by the user by actuation of switches on the headphone 2.

When the headphone 2 detects that the power is turned on (Step E1), it is set in the standby mode (Step E2). Thereafter, it completes the Inquiry process, and then transmits a page (connection request) (Step E3). If there is a response thereto (Step E4), a link with the music reproduction apparatus 1 is established (Step E5) and the headphone 2 is transitioned to the low-power consumption operation mode "Sleep Mode 1" (Step E6). At this time, the music reproduction apparatus 1 is also transitioned to the low-power consumption operation mode "Sleep Mode 1" automatically (or in response to the command from the headphone 2).

Thereafter, if the reproduction button is depressed on the headphone 2 (Step E7), the headphone 2 transitions from the low-power consumption operation mode to the ordinary operation mode (Step E8). At the same time, the headphone 2 transmits to the music reproduction apparatus 1 a command that the music reproduction apparatus 1 should recover to the ordinary operation mode (Step E9). Then, it transmits to the music reproduction apparatus 1 a command that a reproduction process should be carried out (Step E10). Then, the headphone 2 receives audio data transmitted from the music reproduction apparatus 1 and outputs sound (Step E11).

Thereafter, if the stop button or the pause button is depressed on the headphone 2 (Step E12), the headphone 2 transmits to the music reproduction apparatus 1 a command that reproduction should be stopped (Step E13), and a command that the music reproduction apparatus 1 should be transitioned to the low-power consumption operation mode "Sleep Mode 1" (Step E14). Then, the procedures from Steps E6 to E14 are repeated.

If the program is constituted such that the music reproduction apparatus 1 is automatically transitioned to the low-power consumption operation mode "Sleep Mode 1" by the procedure in Step E13, Step E14 is unnecessary.

FIG. 13 shows procedures in the music reproduction apparatus 1 (slave) when Sleep Mode 1 is set.

When the music reproduction apparatus 1 detects that the power is turned on (Step F1), it is set in the standby mode (Step F2). Thereafter, if it receives a page (connection request) from the headphone 2 (Step F3), it responds thereto (Step F4). As a result, a link with the headphone 2 is established (Step F5) and the music reproduction apparatus 1 is transitioned to the low-power consumption operation mode "Sleep Mode 1" (Step F6). At this time, the music reproduction apparatus is transitioned to the low-power consumption operation mode "Sleep Mode 1" automatically (or in response to the command from the headphone 2).

Thereafter, if the music reproduction apparatus 1 receives from the headphone 2 a command that it should recover to the ordinary operation mode (Step F7), it transitions from the low-power consumption operation mode to the ordinary operation mode (Step F8). If it receives from the headphone 2 a command that a reproduction process should be carried out (Step F9), it reproduces audio data and transmits the audio data to the headphone 2 (Step F10).

Thereafter, if the music reproduction apparatus 1 receives from the headphone 2 a command that the reproduction should be stopped (Step F11), it stops the reproduction (Step F12). If it receives from the headphone 2 a command it should be transitioned to the low-power consumption operation mode "Sleep Mode 1" (Step F13), the procedures from Steps F6 to F13 are repeated. Alternatively, the Sleep Mode 1 may be entered automatically when the reproduction stop request is received.

FIG. 14 shows procedures in the headphone (master) when Sleep Mode 2 is set.

When the headphone 2 detects that the power is turned on (Step G1), it is set in the standby mode (Step G2).

Thereafter, if the reproduction button is depressed (Step G3), the headphone 2 completes the Inquiry process if necessary. Then, it transmits a page (connection request) (Step G4). If there is any response to the request (Step G5), a link with the music reproduction apparatus 1 is established (Step G6). Then, the headphone 2 transmits to the music reproduction apparatus 1 a command that a reproduction process should be carried out (Step G7), receives audio data transmitted from the music reproduction apparatus 1 and outputs sound (Step G8).

Thereafter, if the stop button or the pause button is depressed on the headphone 2 (Step G9), the headphone 2 transmits to the music reproduction apparatus 1 a command that reproduction should be stopped (Step G10). At the same time, it transmits a disconnection request and a command that the music reproduction apparatus 1 should be transitioned to the low-power consumption operation mode "Sleep Mode 2" (Step G11), and cuts the connection (Step G12). Then, the procedures from Steps G2 to G12 are repeated.

The music reproduction apparatus 1 may be programmed to automatically cut off the connection and transition to the low-power consumption operation mode "Sleep Mode 1" by the procedure in Step G10, in which case, Step G11 is unnecessary.

FIG. 15 shows procedures in the music reproduction apparatus 1 (slave) when Sleep Mode 2 is set.

When the music reproduction apparatus 1 detects that the power is turned on (Step H1), it is set in the standby mode (Step H2). Thereafter, if it receives a page (connection request) from the headphone 2 (Step H3), it responds thereto (Step H4). As a result, a link with the headphone 2 is established (Step H5). Thereafter, if the music reproduction apparatus 1 receives from the headphone 2 a command that a reproduction process should be carried out (Step H6), it reproduces audio data and transmits the audio data to the headphone 2 (Step H7).

Then, if the music reproduction apparatus 1 receives from the headphone 2 a command that the reproduction should be stopped (Step H8), it stops the reproduction (Step H9). If it receives from the headphone 2 a disconnection request and a command that it should be transitioned to the low-power consumption operation mode "Sleep Mode 2" (Step H10), it cuts off the connection (Step H11), and the procedures from Steps H2 to H11 is repeated. The stop command of step H9 may automatically cause execution of step H11 in which case step H10 is omitted.

As has been described, according to the above embodiment, there is provided a connection-type radio communication system including the music reproduction apparatus 1 capable of reproducing audio data and the headphone 2 capable of outputting sound based on the reproduced audio data, wherein the power consumption of the overall system can be reduced, while ease of the operation of the music reproduction apparatus 1 and the headphone 2 is maintained.

For example, in the above embodiment, the same low-power consumption operation mode is set in both the music reproduction apparatus 1 and the headphone 2. However, different low-power consumption operation modes can be set therein. Alternatively, the low-power consumption operation mode can be set in either the music reproduction apparatus 1 or the headphone 2.

It is noted that generally, the master unit, whether it be the music reproduction or the headset, is the unit the user will normally use in depressing the "play", "pause" or "stop" buttons or setting these function by means of some actuation mechanism on the master unit. However, even in such case, according to other embodiments of the invention, duplicate buttons or duplicate actuation mechanism are provided on the slave unit. In such case, a "play" or "stop" command may be initiated by the user depressing the "play" or "stop" button on the slave and, in the Sleep Mode 1, a signal is sent from the slave to the master. In the case of the "play" command, the signal causes the master unit to send a wake up request to the slave as in the previously described processes (e.g., step B7-8; or E7-8). In the case of a stop command, the signal sent from the slave to the master causes the master to transmit a stop command as in the cases described above (steps B10, E12-13, C8-9). However, if the master and slave are in the Sleep Mode 2, actuation on a "play" command on the slave will cause the slave unit to become the master unit since communications links are disconnected in the Sleep Mode 2 and must be re-established.

Further, when the system is transitioned from the ordinary power consumption operation mode to the low-power consumption operation mode or transitions from the low-power consumption operation mode to the ordinary power consumption operation mode, it may notify the user with a beep or the like.

It is also possible for either of both of the headphone 2 and the music reproduction apparatus 1 to have a timer which may be set by the user or factory set. The timer will automatically cause entry into either Sleep Mode 1 or Sleep Mode 2 upon the expiration of the set time. It is also possible to have the timer function deactivated by the user.

It is further noted that the "ordinary operation mode" is generally the mode of operation in which content data is being transmitted from the music reproduction apparatus 1 to the headphone 2. If this mode was preceded by a low-power consumption mode, there will be always a high-power mode initiated just prior to transmission of content data. The ordinary operation mode may also be understood to include this period of time in which the increase of power has taken place.

In the above embodiment, audio data is used as a kind of content data. However, the present invention is not limited to this embodiment, and video data may be used instead of audio data. In this case, it is only necessary that the combination of a music reproduction apparatus and a headphone is replaced by the combination of an image reproduction apparatus and an image output apparatus. Further, it is possible to use both audio data and video data.

As has been described above, according to the present invention, power consumption can be reduced, while ease of the operation is maintained.

## Claims

1. A power consumption control method applied to a communication system including a reproduction apparatus (1) capable of reproducing audio and/or video content data and an output apparatus (2) capable of outputting sound and/or images based on the reproduced audio and/or video content data, the method comprising:
transmitting the audio and/or video content data reproduced by the reproducing apparatus to the output apparatus in an ordinary operation mode (A10; C7; F10; H7) through a connection-type radio communication interface wherein data is transmitted and received in a state where a logical connection is maintained; and
providing a low-power consumption operation mode in which power consumption relating to radio communication is reduced as compared to the ordinary operation mode, the low power consumption operation mode (A6; B6; C2; D2; E6; F6; G2; H2) including a first user selectable mode in which the logical connection of the radio communication is maintained and a second user selectable mode in which the logical connection is cut off;
transitioning at least one of the reproducing apparatus and the output apparatus from said ordinary operation mode to said low-power consumption operation mode by a command through the radio communication interface (A13, B10, B6; C10, D7, D2; E14, F13, F6; G11, H10, H2), when a data reproduction stop request is made in another of the reproducing apparatus and the output apparatus (A11; C8; E12; G9).

2. The power consumption control method according to claim 1, **characterized in that** when the data reproduction stop request is made in the output apparatus (E12; G9), the reproduction apparatus is transitioned to the low-power consumption operation mode (E14; F13, F6; G11, H10, H2) through the radio communication interface and the output apparatus is transitioned to the low-power consumption operation mode (E6; G2).

3. The power consumption control method according to claim 2, **characterized in that** when a data reproduction request is made in the output apparatus (E7; G3), the output apparatus is recovered from the low-power consumption operation mode to the ordinary operation mode (E8; G6) and the reproduction apparatus is recovered from the low-power consumption operation mode to the ordinary operation mode through the radio communication interface (E9, F7-F8; G4, H3-H5).

4. The power consumption control method according to any one of claims 1 to 3, **characterized in that** when the data reproduction stop request is made in the reproduction apparatus (A11; C8), the output apparatus is transitioned to the low-power consumption operation mode through the radio communication interface (A13, B10, B6; C10, D7, D2) and the reproduction apparatus is transitioned to the low-power consumption operation mode (A6; C2).

5. The power consumption control method according to claim 4, **characterized in that** when the data reproduction stop request is made in the reproduction apparatus (A7; C3), the reproduction apparatus is recovered from the low-power consumption operation mode to the ordinary mode (A8; C4-C6), and the output apparatus is recovered from the low-power consumption operation mode to the ordinary operation mode through the radio communication interface (B7-B8; D3-D5).

6. The power consumption control method according to any of claims 1 to 5, **characterized in that** when a data reproduction request is made in one of the reproducing apparatus and the output apparatus, if the connection of the radio communication has been cut off, the connection of the radio communication is established and the other of the reproduction and the output apparatus is recovered from the low-power consumption operation mode to the ordinary operation mode (C3-C6, D3-D5; G3-G6, H3-H5).

7. An output apparatus (2), comprising:
a radio communication interface (22) wherein data is transmitted and received in a state where a logical connection is maintained;
an output control means (251) for outputting sound and/or images in accordance with audio and/or video content data transmitted from a reproduction apparatus through the radio communication interface in an ordinary operation mode (A10; C7; F10; H7); and
a power control means (253) for providing a low-power consumption operation mode in which power consumption relating to radio communication is reduced as compared to ordinary operation mode, the low power consumption operation mode (A6; B6; C2; D2; E6; F6; G2; H2) including a first user selectable mode in which the logical connection of the radio communication is maintained and a second user selectable mode in which the logical connection is cut off;
wherein said power control means (253) is adapted for controlling at least the reproduction apparatus to transition from an ordinary operation mode in which audio and/or video content data is transmitted to said low-power consumption operation mode by a command through the radio communication interface, when a data reproduction stop request is made at the output apparatus.

8. The output apparatus according to claim 7, **characterized in that** the power control means (253) transitions the output apparatus to the low-power consumption operation mode, when the data reproduction stop request is made.

9. The output apparatus according to claim 8, **characterized in that** the power control means (253) transitions the output apparatus from the low-power consumption operation mode to the ordinary operation mode, and the reproduction apparatus from the low-power consumption operation mode to the ordinary operation mode through the radio communication interface, when a data reproduction request is made.

10. A reproduction apparatus (1), comprising:
a radio communication interface (13) wherein data is transmitted and received in a state where a logical connection is maintained;
reproduction control means (151) for reproducing audio and/or video content data;
transmission control means (152) for transmitting the audio and/or video content data reproduced by the reproduction control means to an output apparatus through the radio communication interface in an ordinary operation mode (A10, C7; F10; H7); and
power control means (153) for providing a low-power consumption operation mode in which power consumption relating to radio communication is reduced as compared to the ordinary operation mode, the low power consumption operation mode (A6; B6; C2; D2; E6; F6; G2; H2) including a first user selectable mode in which the logical connection of the radio communication is maintained and a second user selectable mode in which the logical connection is cut off;
wherein said power control means (153) is adapted for controlling at least the output apparatus to transition from an ordinary operation mode in which audio and/or video content data is transmitted, to a low-power consumption operation mode by a command through the radio communication interface, when a data reproduction stop request is made at the reproduction apparatus.

11. The reproduction apparatus according to claim 10, **characterized in that** the power control means (153) transitions the reproduction apparatus to the low-power consumption operation mode, when the data reproduction stop request is made.

12. The reproduction apparatus according to claim 11, **characterized in that** the power control means (153) transitions the reproduction apparatus from the low-power consumption operation mode to the ordinary operation mode, and the output apparatus from the low-power consumption operation mode to the ordinary operation mode through the radio communication interface, when a data reproduction request is made.

## Patentansprüche

1. Leistungsverbrauch-Steuerverfahren, das auf ein Kommunikationssystem angewendet wird, das eine Wiedergabevorrichtung (1), die in der Lage ist, Audio- und/oder Videoinhaltsdaten wiederzugeben, und eine Ausgabevorrichtung (2), die in der Lage ist, Ton und/oder Bilder basierend auf den wiedergegeben Audio- und/oder Videoinhaltsdaten auszugeben, aufweist, wobei das Verfahren umfasst:
Übertragen der Audio- und/oder Videoinhaltsdaten, die durch die Wiedergabevorrichtung wiedergegeben werden, an die Ausgabevorrichtung in einem gewöhnlichen Betriebsmodus (A10; C7; F10; H7) durch eine Funkkommunikationsschnittstelle vom Verbindungstyp, wobei die Daten in einem Zustand übertragen und empfangen werden, bei dem eine logische Verbindung aufrechterhalten wird; und
Bereitstellen eines Betriebsmodus mit niedrigem Leistungsverbrauch, bei dem der Leistungsverbrauch bezogen auf die Funkkommunikation verglichen mit dem gewöhnlichen Betriebsmodus verringert ist, wobei der Betriebsmodus mit niedrigem Leistungsverbrauch (A6; B6; C2; D2; E6; F6; G2; H2) einen ersten Benutzer-auswählbaren Modus, bei dem die logische Verbindung der Funkkommunikation aufrechterhalten wird, und einen zweiten Benutzer-auswählbaren Modus, bei dem die logische Verbindung abgeschnitten wird, umfasst;
Überleiten von mindestens der Wiedergabevorrichtung und/oder der Ausgabevorrichtung von dem gewöhnlichen Betriebsmodus in den Betriebsmodus mit niedrigem Leistungsverbrauch durch einen Befehl durch die Funkkommunikationsschnittstelle (A13, B10, B6; C10, D7, D2, E14 F13, F6; G11, H10, H21), wenn eine Datenwiedergabestoppanforderung in der anderen von der Wiedergabevorrichtung und der Ausgabevorrichtung (A11; C8; E12; G9) durchgeführt wird.

2. Leistungsverbrauch-Steuerverfahren gemäß Anspruch 1, **dadurch gekennzeichnet, dass**, wenn die Datenwiedergabestoppanforderung in der Ausgabevorrichtung (E12; G9) durchgeführt wird, die Wiedergabevorrichtung in den Betriebsmodus mit niedrigem Leistungsverbrauch (E14; F13, F6; G11, H10, H2) durch die Funkkommunikationsschnittstelle übergeleitet wird, und die Ausgabevorrichtung in den Betriebsmodus mit niedrigem Leistungsverbrauch (E6; G2) übergeleitet wird.

3. Leistungsverbrauch-Steuerverfahren gemäß Anspruch 2, **dadurch gekennzeichnet, dass**, wenn die Datenwiedergabestoppanforderung in der Ausgabevorrichtung (E7; G3) durchgeführt wird, die Ausgabevorrichtung von dem Betriebsmodus mit niedrigem Leistungsverbrauch in den gewöhnlichen Betriebsmodus (E8; G6) wiederhergestellt wird, und die Wiedergabevorrichtung von dem Betriebsmodus mit niedrigem Leistungsverbrauch in den gewöhnlichen Betriebsmodus durch die Funkkommunikationsschnittstelle (E9, F7-F8; G4, H3-H5) wiederhergestellt wird.

4. Leistungsverbrauch-Steuerverfahren gemäß einem der Ansprüche 1 bis 3, **dadurch gekennzeichnet, dass**; wenn die Datenwiedergabestoppanforderung in der Ausgabevorrichtung (A11; C8) durchgeführt wird, die Ausgabevorrichtung in den Betriebsmodus mit niedrigem Leistungsverbrauch durch die Funkkommunikationsschnittstelle (A13, B10, B6; C10, D7, D2) übergeleitet wird und die Wiedergabevorrichtung in den in den Betriebsmodus mit niedrigem Leistungsverbrauch (A6; C2) übergeleitet wird.

5. Leistungsverbrauch-Steuerverfahren gemäß Anspruch 4, **dadurch gekennzeichnet, dass**, wenn die Datenwiedergabestoppanforderung in der Ausgabevorrichtung (A7; C3) durchgeführt wird, die Wiedergabevorrichtung von dem Betriebsmodus mit niedrigem Leistungsverbrauch in den gewöhnlichen Betriebsmodus (A8; C4-C6) wiederhergestellt wird, und die Ausgabevorrichtung von dem Betriebsmodus mit niedrigem Leistungsverbrauch in den gewöhnlichen Betriebsmodus durch die Funkkommunikationsschnittstelle (B7-B8; D3-D5) wiederhergestellt wird.

6. Leistungsverbrauch-Steuerverfahren gemäß einem der Ansprüche 1 bis 5, **dadurch gekennzeichnet, dass**, wenn die Datenwiedergabestoppanforderung in der Wiedergabevorrichtung oder der Ausgabevorrichtung durchgeführt wird, falls die Verbindung der Funkkommunikation abgeschnitten wurde, die Verbindung der Funkkommunikation aufgebaut wird, und die andere von der Wiedergabe- und der Ausgabevorrichtung von dem Betriebsmodus mit niedrigem Leistungsverbrauch in den gewöhnlichen Betriebsmodus (C3-C6, D3-D5; G3-G6, H3-H5) wiederhergestellt wird.

7. Ausgabevorrichtung (2), mit:
einer Funkkommunikationsschnittstelle (22), bei der Daten in einem Zustand übertragen und empfangen werden, bei dem eine logische Verbindung aufrechterhalten wird;
einem Ausgabesteuermittel (251) zum Ausgeben von Ton und/oder Bildern in Übereinstimmung mit Audio- und/oder Videoinhaltsdaten, die von einer Wiedergabevorrichtung durch die Funkkommunikationsschnittstelle in einem gewöhnlichen Betriebsmodus (A10; C7; F10; H7) übertragen werden; und
einem Leistungssteuermittel (253) zum Bereitstellen eines Betriebsmodus mit niedrigem Leistungsverbrauch, bei dem der Leistungsverbrauch bezogen auf die Funkkommunikation verglichen mit dem gewöhnlichen Betriebsmodus verringert wird, wobei der Betriebsmodus mit niedrigem Leistungsverbrauch (A6; B6; C2; D2; E6; F6; G2; H2) einen ersten Benutzer-auswählbaren Modus, bei dem die logische Verbindung der Funkkommunikation aufrechterhalten wird, und einen zweiten Benutzer-auswählbaren Modus, bei dem die logische Verbindung abgeschnitten wird, umfasst;
wobei das Leistungssteuermittel (253) angepasst ist, um mindestens die Wiedergabevorrichtung zu steuern, um von einem gewöhnlichen Betriebsmodus, bei dem Audio- und/oder Videoinhaltsdaten übertragen werden, in den Betriebsmodus mit niedrigem Leistungsverbrauch durch einen Befehl durch die Funkkommunikationsschnittstelle überzugehen, wenn eine Datenwiedergabestoppanforderung bei der Ausgabevorrichtung durchgeführt wird.

8. Ausgabevorrichtung gemäß Anspruch 7, **dadurch gekennzeichnet, dass** das Leistungssteuermittel (253) die Ausgabevorrichtung in den Betriebsmodus mit niedrigem Leistungsverbrauch überleitet, wenn die Datenwiedergabestoppanforderung durchgeführt wird.

9. Ausgabevorrichtung gemäß Anspruch 8, **dadurch gekennzeichnet, dass** das Leistungssteuermittel (253) die Ausgabevorrichtung von dem Betriebsmodus mit niedrigem Leistungsverbrauch in den gewöhnlichen Betriebsmodus überleitet und die Wiedergabevorrichtung von dem Betriebsmodus mit niedrigem Leistungsverbrauch in den gewöhnlichen Betriebsmodus durch die Funkkommunikationsschnittstelle überleitet, wenn eine Datenwiedergabeanforderung durchgeführt wird.

10. Wiedergabevorrichtung (1), mit:
einer Funkkommunikationsschnittstelle (13), bei der Daten in einem Zustand übertragen und empfangen werden, bei dem eine logische Verbindung aufrechterhalten wird;
einem Wiedergabesteuermittel (151) zum Wiedergeben von Audio- und/oder Videoinhaltsdaten;
einem Übertragungssteuermittel (152) zum Übertragen der durch das Wiedergabesteuermittel wiedergegebenen Audio- und/oder Videoinhaltsdaten an eine Ausgabevorrichtung durch die Funkkommunikationsschnittstelle in einem gewöhnlichen Betriebsmodus (A10, C7; F10; H7); und
einem Leistungssteuermittel (153) zum Bereitstellen eines Betriebsmodus mit niedrigem Leistungsverbrauch, bei dem der Leistungsverbrauch bezogen auf die Funkkommunikation verglichen mit dem gewöhnlichen Betriebsmodus verringert ist,
wobei der Betriebsmodus mit niedrigem Leistungsverbrauch (A6; B6; C2; D2; E6; F6; G2; H2) einen ersten Benutzer-auswählbaren Modus, bei dem die logische Verbindung der Funkkommunikation aufrechterhalten wird, und einen zweiten Benutzer-auswählbaren Modus, bei dem die logische Verbindung abgeschnitten ist, umfasst;
wobei das Leistungssteuermittel (153) angepasst ist, um mindestens die Ausgabevorrichtung zu steuern, um von einem gewöhnlichen Betriebsmodus, bei dem Audio- und/oder Videoinhaltsdaten übertragen werden, in einen Betriebsmodus mit niedrigem Leistungsverbrauch durch einen Befehl durch die Funkkommunikationsschnittstelle überzugehen, wenn eine Datenwiedergabestoppanforderung bei der Wiedergabevorrichtung durchgeführt wird.

11. Ausgabevorrichtung gemäß Anspruch 10, **dadurch gekennzeichnet, dass** das Leistungssteuermittel (153) die Wiedergabevorrichtung in den Betriebsmodus mit niedrigem Leistungsverbrauch überleitet, wenn die Datenwiedergabeanforderung durchgeführt wird.

12. Ausgabevorrichtung gemäß Anspruch 11, **dadurch gekennzeichnet, dass** das Leistungssteuermittel (153) die Wiedergabevorrichtung von dem Betriebsmodus mit niedrigem Leistungsverbrauch in den gewöhnlichen Betriebsmodus überleitet und die Ausgabevorrichtung von dem Betriebsmodus mit niedrigem Leistungsverbrauch in den gewöhnlichen Betriebsmodus durch die Funkkommunikationsschnittstelle überleitet, wenn eine Datenwiedergabeanforderung durchgeführt wird.

## Revendications

1. Procédé de commande de consommation d'énergie appliqué à un système de communication comprenant un appareil de reproduction (1) capable de reproduire des données de contenus audio et/ou vidéo et un appareil de sortie (2) capable de restituer du son et/ou des images sur la base des données de contenus audio et/ou vidéo reproduites, le procédé comprenant :
la transmission des données de contenus audio et/ou vidéo reproduites par l'appareil de reproduction à l'appareil de sortie en mode de fonctionnement ordinaire (A10 ; C7 ; F10 ; H7) par le biais d'une interface de communication radio à connexion, où les données sont transmises et reçues dans un état dans lequel une connexion logique est maintenue ; et
le fait de prévoir un mode de fonctionnement à faible consommation d'énergie dans lequel la consommation d'énergie liée à la communication radio est réduite en comparaison avec le mode de fonctionnement ordinaire, le mode de fonctionnement à faible consommation d'énergie (A6 ; B6 ; C2 ; D2 ; E6 ; F6 ; G2 ; H2) comprenant un premier mode sélectionnable par l'utilisateur dans lequel la connexion logique de la communication radio est maintenue et un second mode sélectionnable par l'utilisateur dans lequel la connexion logique est coupée ;
le fait de faire passer au moins l'un de l'appareil de reproduction et de l'appareil de sortie dudit mode de fonctionnement ordinaire audit mode de fonctionnement à faible consommation d'énergie à l'aide d'une commande par le biais de l'interface de communication radio (A13, B10, B6 ; C10, D7, D2 ; E14, F13, F6 ; G11, H10, H2), lorsqu'une demande d'arrêt de reproduction des données est effectuée dans un autre de l'appareil de reproduction et de l'appareil de sortie (A11 ; C8 ; E12 ; G9).

2. Procédé de commande de consommation d'énergie selon la revendication 1, **caractérisé en ce que**, lorsque la demande d'arrêt de reproduction des données est effectuée dans l'appareil de sortie (E12 ; G9), l'appareil de reproduction passe au mode de fonctionnement à faible consommation d'énergie (E14 ; F13, F6 ; G11, H10, H2) par le biais de l'interface de communication radio, et l'appareil de sortie passe au mode de fonctionnement à faible consommation d'énergie (E6 ; G2).

3. Procédé de commande de consommation d'énergie selon la revendication 2, **caractérisé en ce que**, lorsqu'une demande de reproduction de données est effectuée dans l'appareil de sortie (E7 ; G3), l'appareil de sortie repasse du mode de fonctionnement à faible consommation d'énergie au mode de fonctionnement ordinaire (E8 ; G6), et l'appareil de reproduction repasse du mode de fonctionnement à faible consommation d'énergie au mode de fonctionnement ordinaire par le biais de l'interface de communication radio (E9, F7-F8; G4, H3-H5).

4. Procédé de commande de consommation d'énergie selon l'une quelconque des revendications 1 à 3, **caractérisé en ce que**, lorsque la demande d'arrêt de reproduction des données est effectuée dans l'appareil de reproduction (A11 ; C8), l'appareil de sortie passe au mode de fonctionnement à faible consommation d'énergie par le biais de l'interface de communication radio (A13, B10, B6 ; C10, D7, D2) et l'appareil de reproduction passe au mode de fonctionnement à faible consommation d'énergie (A6 ; C2).

5. Procédé de commande de consommation d'énergie selon la revendication 4, **caractérisé en ce que**, lorsque la demande d'arrêt de reproduction des données est effectuée dans l'appareil de reproduction (A7; C3), l'appareil de reproduction repasse du mode de fonctionnement à faible consommation d'énergie au mode ordinaire (A8 ; C4-C6), et l'appareil de sortie repasse du mode de fonctionnement à faible consommation d'énergie au mode de fonctionnement ordinaire par le biais de l'interface de communication radio (B7-B8 ; D3-D5).

6. Procédé de commande de consommation d'énergie selon l'une quelconque des revendications 1 à 5, **caractérisé en ce que**, lorsqu'une demande de reproduction de données est effectuée dans l'un de l'appareil de reproduction et de l'appareil de sortie, si la connexion de la communication radio a été coupée, la connexion de la communication radio est établie et l'autre de l'appareil de reproduction et de l'appareil de sortie repasse du mode de fonctionnement à faible consommation d'énergie au mode de fonctionnement ordinaire (C3-C6, D3-D5 ; G3-G6, H3-H5).

7. Appareil de sortie (2), comprenant:
une interface de communication radio (22) dans laquelle des données sont transmises et reçues dans un état dans lequel une connexion logique est maintenue ;
un moyen de commande de sortie (251) destin à délivrer un son et/ou des images selon les données de contenus audio et/ou vidéo transmises par un appareil de reproduction par le biais de l'interface de communication radio dans un mode de fonctionnement ordinaire (A10 ; C7 ; F10 ; H7) ; et
un moyen de commande d'énergie (253) destiné à assurer un mode de fonctionnement à faible consommation d'énergie dans lequel la consommation d'énergie liée à la communication radio est réduite en comparaison avec le mode de fonctionnement ordinaire, le mode de fonctionnement à faible consommation d'énergie (A6 ; B6 ; C2 ; D2 ; E6 ; F6 ; G2 ; H2) comprenant un premier mode sélectionnable par l'utilisateur dans lequel la connexion logique de la communication radio est maintenue et un second mode sélectionnable par l'utilisateur dans lequel la connexion logique est coupée ;
dans lequel ledit moyen de commande d'énergie (253) est adapté afin de contrôler au moins l'appareil de reproduction de façon à ce qu'il passe d'un mode de fonctionnement ordinaire dans lequel des données de contenus audio et/ou vidéo sont transmises audit mode de fonctionnement à faible consommation d'énergie à l'aide d'une commande par le biais de l'interface de communication radio, lorsqu'une demande d'arrêt de reproduction des données est effectuée au niveau de l'appareil de sortie.

8. Appareil de sortie selon la revendication 7, **caractérisé en ce que** le moyen de commande d'énergie (253) fait passer l'appareil de sortie au mode de fonctionnement à faible consommation d'énergie, lorsque la demande d'arrêt de reproduction des données est effectuée.

9. Appareil de sortie selon la revendication 8, **caractérisé en ce que** le moyen de commande d'énergie (253) fait passer l'appareil de sortie du mode de fonctionnement à faible consommation d'énergie au mode de fonctionnement ordinaire, et l'appareil de reproduction du mode de fonctionnement à faible consommation d'énergie au mode de fonctionnement ordinaire, par le biais de l'interface de communication radio, lorsqu'une demande de reproduction de données est effectuée.

10. Appareil de reproduction (1), comprenant:
une interface de communication radio (13) dans laquelle des données sont transmises et reçues dans un état dans lequel une connexion logique est maintenue;
un moyen de commande de reproduction (151) destiné à reproduire des données de contenus audio et/ou vidéo ;
un moyen de commande de transmission (152) destiné à transmettre les données de contenus audio et/ou vidéo reproduites par le moyen de commande de reproduction à un appareil de sortie, par le biais de l'interface de communication radio, dans un mode de fonctionnement ordinaire (A10, C7 ; F10 ; H7) ; et
un moyen de commande d'énergie (153) destiné à assurer un mode de fonctionnement à faible consommation d'énergie dans lequel la consommation d'énergie liée à la communication radio est réduite en comparaison avec le mode de fonctionnement ordinaire, le mode de fonctionnement à faible consommation d'énergie (A6 ; B6 ; C2 ; D2 ; E6 ; F6 ; G2 ; H2) comprenant un premier mode sélectionnable par l'utilisateur dans lequel la connexion logique de la communication radio est maintenue et un second mode sélectionnable par l'utilisateur dans lequel la connexion logique est coupée ;
dans lequel ledit moyen de commande d'énergie (153) est adapté afin de contrôler au moins l'appareil de sortie de façon à ce qu'il passe d'un mode de fonctionnement ordinaire dans lequel des données de contenus audio et/ou vidéo sont transmises à un mode de fonctionnement à faible consommation d'énergie, à l'aide d'une commande par le biais de l'interface de communication radio, lorsqu'une demande d'arrêt de reproduction des données est effectuée au niveau de l'appareil de reproduction.

11. Appareil de reproduction selon la revendication 10, **caractérisé en ce que** le moyen de commande d'énergie (153) fait passer l'appareil de reproduction au mode de fonctionnement à faible consommation d'énergie lorsque la demande d'arrêt de reproduction des données est effectuée.

12. Appareil de reproduction selon la revendication 11, **caractérisé en ce que** le moyen de commande d'énergie (153) fait passer l'appareil de reproduction du mode de fonctionnement à faible consommation d'énergie au mode de fonctionnement ordinaire, et l'appareil de sortie du mode de fonctionnement à faible consommation d'énergie au mode de fonctionnement ordinaire, par le biais de l'interface de communication radio, lorsqu'une demande de reproduction de données est effectuée.
